# FASCICULE DE BREVET EUROPEEN

(11) **EP 0 541 434 B1**
(45) Date de publication et mention de la délivrance du brevet: **14.08.1996**
(21) Numéro de dépôt: 92402974.7
(22) Date de dépôt: 03.11.1992
(51) Int. Cl.: G01N 29/10

(54) **Procédé et dispositif de contrôle interne de pièces par ultrasons**
Verfahren und Vorrichtung zur Ultraschallprüfung von Werkzeugen
Method and apparatus for the ultrasonic testing of workpieces

(30) Priorité: 05.11.1991 FR 9113629
(43) Date de publication de la demande: 12.05.1993
(73) Titulaire: UNIVERSITE PARIS VII, F-75221 Paris Cedex 05 (FR)
(72) Inventeur: Fink, Mathias, F-92190 Meudon (FR)
(74) Mandataire: Fort, Jacques

(56) Documents cités:
- EP-A- 0 383 650
- GB-A- 826 774
- GB-A- 2 074 732
- US-A- 4 463 608

## Description

L'invention concerne les procédés et dispositifs de contrôle interne non destructif de pièce par ultrasons, par comparaison entre la réponse de la pièce à contrôler et une réponse étalon, constituée à partir d'une pièce réputée satisfaisante, ou d'une moyenne entre les réponses de plusieurs pièces insusceptibles de présenter le même défaut, ou encore d'un modèle mathématique.

L'invention trouve une application particulièrement importante, bien que non exclusive, dans le repérage de failles, criques, fissures et hétérogénéités dans des matériaux variés tels que les métaux, les composites et les céramiques.

On connaît déjà de nombreux dispositifs de contrôle de pièce par ultrasons, fonctionnant en transmission ou en réflexion. Lorsque l'on veut réaliser une image en profondeur de la pièce en utilisant comme source et comme récepteur un réseau de transducteurs, une difficulté majeure nait du fait que l'écho de réflexion sur l'interface d'entrée de la pièce est beaucoup plus intense que les échos éventuels provenant des défauts et que cet écho d'interface masque les échos à identifier. Le problème est encore aggravé lorsque la pièce a une forme complexe et/ou une structure hétérogène.

Faute de pouvoir éliminer l'écho parasite sur l'interface d'entrée (et éventuellement les échos provenant de réflexions multiples sur les interfaces d'entrée et de sortie), l'invention vise à le compenser.

Pour cela l'invention fait appel à la technique que l'on peut qualifier d'amplification ultrasonore à retournement temporel décrite dans le document EP-A-0 383 650 auquel on pourra se reporter. Cette technique est elle-même fondée sur l'invariance des équations de forme d'ondes en cas de retournement temporel, y compris en cas de signaux à très large bande fréquentielle. Suivant le document EP-A-0 383 650, on illumine d'abord une zone à étudier à partir d'un ou de plusieurs transducteurs appartenant à un réseau bidimensionnel et on enregistre les échos provenant du matériau dans des mémoires électroniques disposées derrière chaque transducteur élémentaire. Dans une deuxième phase, on réémet les signaux reçus après avoir inversé leur répartition temporelle et éventuellement leur forme. En d'autres termes, les signaux reçus en dernier sont renvoyés en premier.

L'effet des variations d'absorption en fonction de la profondeur peut être compensé en modifiant le gain d'amplification de l'onde retournée temporellement en fonction du temps d'aller retour.

Le but de ce retournement temporel était, lorsqu'une onde représente un écho provenant d'un défaut, de la renvoyer vers le défaut avec une amplitude accrue. On refocalisait ainsi un front d'ondes divergent renvoyé par un défaut de forme quelconque et ce de façon optimale.

L'invention fait une application différente du retournement temporel et utilise deux réseaux de transducteurs entourant la pièce à contrôler. Le but que l'on cherchera à atteindre par retournement temporel est de déterminer la forme optimale des signaux à appliquer aux deux réseaux de transducteurs afin de détruire par interférence l'écho réfléchi par une des interfaces de la pièce au moins.

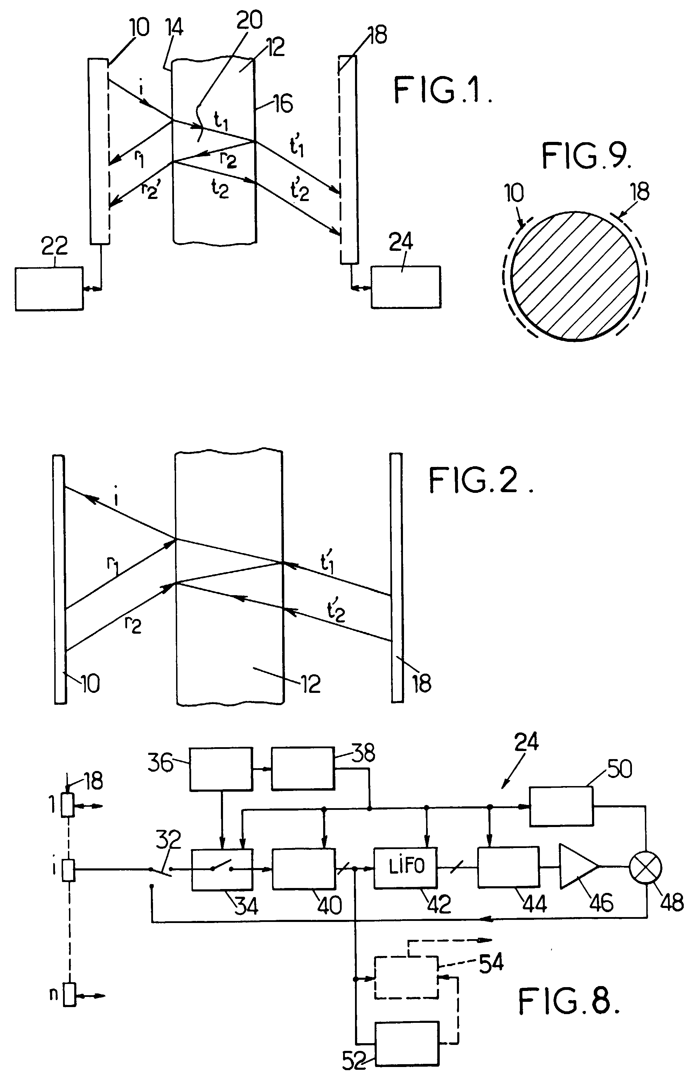

Elle sera mieux comprise en donnant une description sommaire et simplifiée, illustrée sur la figure 1. Pour plus de simplicité, il ne sera pas question de front d'onde, mais d'un rayon incident i isolé.

Un tel rayon incident, provenant d'un réseau 10 de transducteurs ultrasonores, donne naissance, dans une pièce 12, à un premier rayon r1 réfléchi sur l'interface d'entrée 14 et un premier rayon réfracté t1. Une fraction de l'énergie du rayon réfracté t1 se réfléchit sur l'interface de sortie 16 et donne naissance à un rayon réfléchi r2 et un rayon réfracté t′1. On peut capter, à l'aide du réseau de transducteurs 10 ou d'un autre réseau placé du même côté de la pièce, le signal d'écho constitué par la juxtaposition des signaux r1, r′2, .... On peut également, à l'aide des transducteurs d'un second réseau 18, enregistrer le signal réfracté constitué par la juxtaposition des signaux t′1, t′2, .... Cet enregistrement peut s'effectuer par voie analogique ou numérique, avec repérage temporel du signal d'écho et du signal réfracté par rapport au signal émis.

Lorsque la mémorisation des signaux est effectuée à partir d'une onde d'entrée de caractéristiques bien déterminées (par exemple par calibrage des signaux d'excitation des transducteurs de la matrice 10) on obtient ainsi deux enregistrements ou mémorisations qui constituent une signature spatio-temporelle représentant de façon bi-univoque la pièce 12. Ce résultat est obtenu quelle que soit la forme de l'onde qui est adressée sur la pièce 12 par le réseau de transducteurs 10. Il peut s'agir d'une onde plane, d'une onde sphérique convergente avec focalisation ou non dans la pièce, d'une onde sphérique divergente, d'une onde cylindrique, etc ; la forme du signal peut être un train amorti, une impulsion de Dirac, etc....

Si on met alors en oeuvre la notion de miroir à renversement temporel, en renvoyant, à partir des deux réseaux de transducteurs ayant servi à l'enregistrement ou mémorisation, avec renversement temporel, des signaux dont la forme et la répartition dans le temps (ou au moins la répartition) sont retournées par rapport à celle qui a été enregistrée, les fronts d'ondes générés aux deux interfaces de la pièce recréeront, avec une chronologie inversée, la scène d'ondes, comme cela sera montré plus loin en faisant référence à la figure 2.

On observera alors, entre la pièce 12 et le réseau 10, un front d'onde unique dont la direction de propagation sera inversée par rapport à l'onde incidente i.

Au surplus, aucun front d'onde ne sera réfléchi entre la pièce 12 et le réseau 18 : ce réseau 18 ne recevra donc aucun écho.

L'invention utilise cette constatation pour permettre de déterminer les différences qui existent entre différentes pièces.

L'invention propose dans ce but un procédé de contrôle interne de pièces par ultrasons, suivant lequel :
(a) on illumine une première pièce à l'aide d'un faisceau ultrasonore provenant d'un premier réseau de transducteurs excités par des signaux d'excitation mémorisés,
(b) on capte les signaux d'écho réfléchis reçus par des transducteurs, qui peuvent être ceux du premier réseau, et on mémorise la forme et la répartition dans le temps de ces échos,
(c) on capte également les signaux réfractés reçus par des transducteurs appartenant à un second réseau, placé à l'opposé du premier par rapport à la pièce, et on mémorise la forme et la répartition dans le temps de ces signaux réfractés reçus par les transducteurs du second réseau,
(d) on remplace la première pièce par une pièce à contrôler ayant la même forme et occupant le même emplacement et on applique à chacun des transducteurs utilisés en (b) et (c) des signaux d'activation obtenus par retournement temporel de la répartition et de la forme mémorisées,
(e) on observe les signaux reçus par les transducteurs du deuxième réseau.

Si la pièce contrôlée est saine, c'est-à-dire identique à la première pièce qui constitue étalon, on ne reçoit pas de signal au cours de l'étape (e).

Tout signal qui n'est pas nul ne peut provenir que de défauts situés dans la pièce. Le défaut peut être alors localisé par seuillage (détermination des signaux de retour supérieur à un seuil) ou par une opération de formatage de voie de réception.

Les étapes (a), (b) et (c) peuvent être effectuées une seule fois, sur une pièce étalon réputée sans défaut. Ces étapes peuvent également être répétées sur plusieurs pièces non susceptibles de présenter les mêmes défauts et dans ce cas on effectue la moyenne des répartitions relevées au cours des étapes (b) et (c) avant retournement temporel. On peut, par un calcul à éléments finis, déterminer les signatures spatio-temporelles d'une pièce, ce qui revient à modéliser mathématiquement les étapes (a) à (c) ci-dessus et permet de s'affranchir des défauts éventuels de la pièce étalon, au prix d'un calcul qui est compliqué lorsque la pièce est de forme complexe. Enfin on peut utiliser la pièce à contrôler elle-même en ne retenant que les échos importants qui proviennent des réflexions sur les interfaces.

Le bon fonctionnement du procédé peut être vérifié en répétant l'étape (d) après avoir remplacé la pièce à contrôler par la première pièce : les transducteurs du deuxième réseau ne doivent recevoir aucun signal.

Quelle que soit la solution retenue, la présence d'un défaut au sein de la pièce, par exemple tel que représenté en 20 sur la figure 1, provoquera, lors du retournement temporel, des réflexions supplémentaires provoquant l'apparition de signaux sur les transducteurs du deuxième réseau.

L'invention propose également un dispositif permettant de mettre en oeuvre le procédé ci-dessus défini, comprenant un premier réseau de transducteurs et un second réseau de transducteurs placé en face du premier, les transducteurs des deux réseaux étant munis chacun d'une voie de traitement comportant un circuit de réception, une mémoire de stockage du signal capté par le transducteur et un émetteur de puissance programmable commandé par la mémoire soit suivant une répartition temporelle inverse de celle stockée dans la mémoire, soit suivant une répartition déterminée par le calcul de formes et de temps d'émission.

Sauf lorsque l'atténuation dans les pièces à contrôler est faible, il faut compenser l'effet de l'atténuation ; il varie, dans le cas du signal d'écho, suivant la profondeur de l'écho et, dans le cas des signaux provenant des ultrasons réfractés, notamment en fonction du nombre de parcours successifs dans la pièce. Pour cela chaque voie associée à un transducteur peut comporter soit un amplificateur suivi d'un atténuateur commandé, soit un amplificateur à gain commandé par un programmateur. Une autre solution consiste à effectuer une amplification logarithmique du signal, à ajouter un signal à variation linéaire au signal logarithmique, puis à effectuer une opération de d'exponentiation avant émission. Cette solution est plus simple, étant donné que les générateurs de rampe sont couramment disponibles.

L'invention sera mieux comprise à la lecture de la description qui suit d'un mode particulier de réalisation donné à titre d'exemple non limitatif. La description se réfère aux dessins qui l'accompagnent, dans lesquels :
- la figure 1, déjà mentionnée, est un schéma de principe destiné à faire apparaître les mesures effectuées en vue de la reconstitution d'un front d'onde par retournement temporel ;
- la figure 2, similaire à la figure 1, montre la reconstitution du front d'onde par retournement temporel ;
- les figures 3 et 4 sont des chronogrammes montrant un exemple de signaux électriques respectivement provenant des transducteurs de détection du signal réfléchi et du signal réfracté ;
- les figures 5 et 6 sont des chronogrammes montrant un exemple de signaux émis par les transducteurs précédemment utilisés pour la détection, en vue d'éclairer la pièce à contrôler ;
- la figure 7 est un chronogramme montrant les signaux reçus par les transducteurs qui ont précédemment reçus le signal réfracté, en présence d'un défaut dans la pièce à contrôler ;
- la figure 8 est un schéma de principe d'une voie associée à un transducteur dans un dispositif selon un mode particulier de réalisation de l'invention ;
- la figure 9 montre une disposition possible des transducteurs dans le cas du contrôle d'une pièce de forme;
- la figure 10 est un schéma de principe montrant une variante du dispositif de la figure 8.

On décrira maintenant la mise en oeuvre du procédé selon l'invention dans son application à la comparaison entre une pièce étalon et des pièces successives ayant exactement la même forme et placées exactement au même emplacement dans le dispositif de contrôle. La pièce est par exemple un organe métallique tel qu'une billette d'alliage ou une pièce en forme telle qu'une aube de turbine ou de soufflante.

Au cours d'une première étape, on illumine la pièce étalon 12 à l'aide d'un faisceau large fourni par un réseau 10 de transducteurs excités par un signal d'excitation mémorisé dans une mémoire non représentée. Ce signal peut être constitué par une impulsion brève attaquant en phase tous les transducteurs 1,..., i,..., n et provenant du même générateur que celui qui sera utilisé par la suite. Les transducteurs du réseau 10 peuvent être répartis suivant une matrice à deux dimensions ou suivant une ligne, lorsqu'on accepte une exploration par balayage. Les transducteurs peuvent être de constitution classique et constitués par des plaquettes de céramique piézo-électrique. Il sera souvent avantageux d'utiliser des transducteurs ayant une fréquence centrale de résonance allant de quelques centaines de KHz à quelques MHz.

La seconde étape du procédé consiste à capter d'une part le signal d'écho, d'autre part le signal réfracté et à mémoriser la forme et la position relative des signaux.

Les transducteurs permettant de fournir un signal représentatif de l'écho peuvent être ceux du réseau 10 ou les transducteurs d'un autre réseau, placés du même côté de la pièce 12 que le réseau 10. Dans le cas qui sera seul considéré maintenant, ce sont les mêmes transducteurs du réseau 10 qui sont utilisés pour l'émission du faisceau ultrasonore et pour la réception de l'écho. Ce réseau de transducteurs est alors relié à une unité 22 de traitement, de mémorisation et de réémission dont un exemple sera décrit plus loin. Il faut seulement noter ici que chaque transducteur du réseau 10 est relié à une vole de traitement ayant un circuit de réception et une mémoire de stockage du signal capté par le transducteur et un émetteur programmable commandé soit par cette mémoire suivant une répartition temporelle retournée par rapport à celle stockée en mémoire, soit par une autre mémoire dans laquelle des formes prédéterminées et/ou des temps d'émission prédéterminés ont été stockés.

Mais cette identité n'est pas nécessaire. On peut en particulier utiliser, pour l'émission, quelques uns simplement des transducteurs qui sont utilisés pour la réception de l'écho.

Les transducteurs sensibles au signal ultrasonore transmis appartiennent à un second réseau 18, placé à l'opposé du réseau 10 par rapport à la pièce 12 et associé à une unité 24 de détection, de mémorisation et de réémission qui peut être très similaire à l'unité 22.

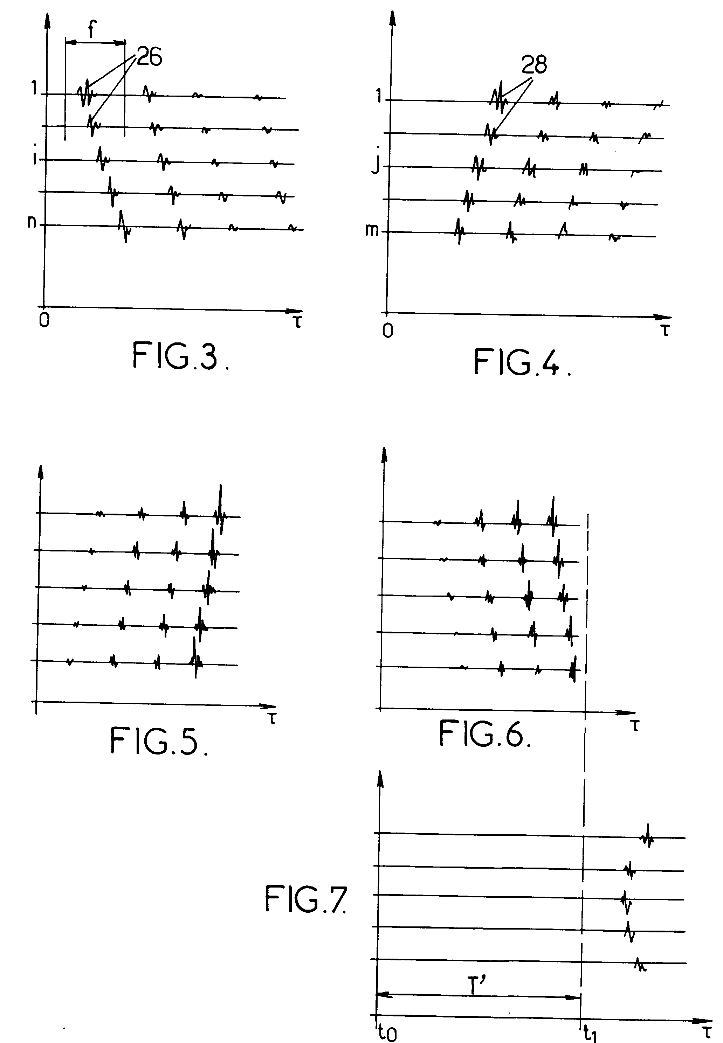

La figure 3 montre une forme que peuvent prendre les signaux électriques qui apparaissent à la sortie des différents transducteurs du réseau 10 et leur échelonnement dans le temps, lorsque le signal électrique d'excitation des transducteurs est constitué par une impulsion brève.

La figure 4 montre la forme que peuvent prendre alors les signaux électriques apparaissant à la sortie des transducteurs 1,..., j,..., m du réseau 18. Sur la figure 3, les trains amortis 26 correspondent à la première réflexion sur l'interface d'entrée 14. Sur la figure 4, les trains amortis 28 correspondent au trajet le plus court représenté sur la figure 1 par i, t1, t′1. On dispose ainsi, à la fin de la seconde étape, d'enregistrements que l'on peut considérer comme la signature de la pièce 12.

Il faut noter qu'au cours du temps les différents fronts d'ondes enregistrés par les transducteurs des réseaux 10 et 18 s'atténuent du fait des réflexions multiples. Au bout d'un temps T suffisamment long, on peut arrêter les enregistrements par les réseaux 10 (figure 3) et 18 (figure 4).

Au cours d'une étape suivante, les signaux mémorisés dans les unités 22 et 24 sont utilisés pour exciter les transducteurs des réseaux 10 et 18, après retournement temporel de la répartition et de la forme des signaux. Dans la mesure où les transducteurs ont une réponse linéaire ou présentent la même caractéristique de réponse à l'émission et à la réception, la forme de l'onde formée par l'excitation des réseaux 10 et 18 reproduit exactement celle de l'onde d'origine. Seule l'intensité est modifiée du fait de l'atténuation subie dans la pièce 12 et éventuellement au cours des trajets avant entrée dans la pièce ou après sortie. Cette vérification peut être faite. Elle n'est cependant pas indispensable. Il suffit en effet de mémoriser la réponse des transducteurs du réseau 10 et du réseau 18.

La troisième étape consiste, dans le mode de réalisation qui vient d'être décrit, à substituer une pièce à contrôler à la pièce étalon 12. La mise en oeuvre de l'invention impose que l'emplacement de la pièce à contrôler soit le même que celui de la pièce étalon.

Pour vérifier l'identité de position, une solution consiste à effectuer une intercorrélation entre les signaux mémorisés dans l'unité 22 pour la pièce étalon et correspondant à la fenêtre temporelle f (donc à la première réflexion sur l'interface 14) et les signaux reçus de la pièce à contrôler, puis à rechercher le maximum de cette intercorrélation. Cela revient à effectuer une émission avec troncature sur la période d'échantillonnage.

En règle générale, il sera cependant suffisant d'effectuer une vérification géométrique, dont la précision est compatible avec la longueur d'onde des ultrasons utilisés, de l'ordre du millimètre.

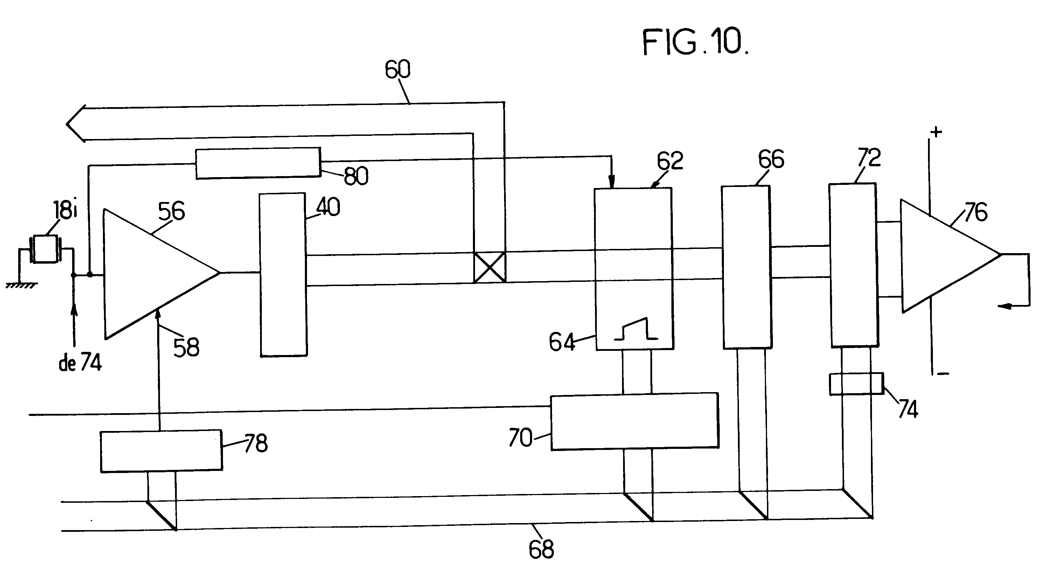

La dernière étape consiste, une fois la pièce à contrôler mise en place, à exciter de nouveau les transducteurs des réseaux 10 et 18 avec retournement temporel de la répartition et de la forme des signaux mémorisés (figures 5 et 6) et à mesurer les signaux fournis par le réseau 18, fonctionnant en récepteur (figure 7). Ces signaux ne peuvent être dus qu'à des défauts de la pièce, car on a éliminé les échos des interfaces.

La détection des défauts ou la réalisation d'une image de l'intérieur de la pièce à contrôler peut alors être effectuée par un traitement des N signaux fournis par les N transducteurs du réseau 18. Ces signaux ne sont recueillis qu'à partir d'un instant t1 retardé, par rapport à l'instant t0 d'émission, d'un intervalle T′ suffisant pour que toute la séquence des signaux retournés temporellement ait été émise par le réseau 18.

Les signaux une fois recueillis et mémorisés, généralement sous forme numérique, un défaut éventuel peut être localisé par divers processus.

Un premier processus consiste à utiliser une méthode de formation de voies de réception, du genre déjà mentionné dans le document EP-A-0 383 650. Pour chaque position possible du défaut, on effectue une sommation de tous les signaux, préalablement décalés les uns par rapport aux autres suivant une loi de retard correspondant à la focalisation pour l'emplacement hypothétique du défaut. On affiche l'amplitude du signal sommé pour chaque position et on réalise une image par reconstruction pas à pas.

Ce processus permet d'obtenir une image satisfaisante. Mais la phase de reconstruction est longue. Si on cherche seulement à détecter la présence d'un défaut, par exemple pour déclencher une alarme, il suffit d'un détecteur de seuil qui provoque une alarme chaque fois que l'un des signaux provenant d'un transducteur du réseau 18 (ou un nombre minimum de signaux) est supérieur au seuil.

Lorsqu'une reconstitution est effectuée par reconstruction pas à pas, une vue globale de la pièce, similaire à un échogramme, peut être constituée.

Pour permettre la détection, le circuit 24 comporte plusieurs voies affectées chacune à un transducteur. La figure 8 montre une seule voie, associée au transducteur i. Etant donné que le même réseau 18 est utilisé pour les diverses émissions et réceptions, la voie comporte un commutateur 32 permettant de passer de la fonction de réception et mémorisation à la fonction d'émission.

Les composants destinés à la réception comprennent un échantillonneur 34 destiné à fournir les échantillons analogiques du signal reçu par le transducteur i à la fréquence d'une horloge 36 (quelques MHz en général) pendant des intervalles de temps fixés par un cadenceur 38. Cet intervalle de temps doit être suffisant pour correspondre à la réception de tous les signaux d'écho r1 pour 10 et de tous les signaux réfractés t′1 pour 18. Il sera pratiquement toujours utile de prévoir des fenêtres temporelles de réception plus étendues, permettant de recevoir également les signaux r′2 et t′2, ou plus généralement tous les signaux d'amplitude significative.

L'échantillonneur 34 est suivi d'un convertisseur analogique-numérique 40. Dans le cas d'une compensation des effets de l'atténuation par d'autre moyens, une conversion sur dix bits est généralement suffisante pour représenter la dynamique en réflexion (pour r1) et en transmission (pour b^{′}₁). Les octets représentatifs chacun d'un échantillon sont mémorisés dans une mémoire 42 organisée en pile d'attente ou LIFO, de capacité suffisante pour stocker tous les échantillons reçus pendant la durée fixée par le cadenceur 38. Le retournement temporel n'est effectué que sur cette durée.

Le cadenceur 38 est prévu de façon à provoquer le début de l'échantillonnage au bout d'un temps déterminé après la première excitation du réseau 10, l'estimation du temps étant facile à partir de la connaissance de la vitesse de propagation des ultrasons et de la distance entre le réseau 10 et l'interface d'entrée 14.

Le cadenceur 38 est également prévu de façon à provoquer l'émission du front d'onde retourné au bout d'un temps prédéterminé après la fin de l'écho. Les composants d'émission de la voie associée au transducteur i comprennent un convertisseur numérique-analogique 44 suivi d'un amplificateur 46. Dans le cas illustré, la voie comprend également un atténuateur 48 dont le rôle est de compenser les variations d'atténuation suivant la profondeur. Le coefficient d'atténuation de l'atténuateur 48 est modifié, en fonction du temps, par un programmateur 50 dans lequel est mémorisée une fonction inverse de l'exponentielle négative d'absorption dans le milieu traversé. Ce programmateur est initialisé par le cadenceur 38.

La voie associée à un transducteur i peut également comporter un comparateur 54 dont le rôle est de comparer les échantillons successifs reçus en réponse à l'émission avec retournement temporel ; les échantillons obtenus en réponse au retournement temporel sur la pièce étalon sont conservés dans une mémoire 52.

L'unité 22 peut avoir la même constitution que l'unité 24, si ce n'est que le cadenceur 38 doit tenir compte de ce que le premier signal n'apparaît à la sortie du réseau 10 qu'à un instant différent du signal apparu sur le réseau 18.

Les réseaux de transducteurs peuvent avoir une forme quelconque, dans la mesure où ils illuminent l'ensemble de la pièce ou du moins la partie contrôler. Il est toutefois préférable d'adapter leur forme à celle de la pièce et par exemple d'utiliser, dans le cas d'une pièce cylindrique, des réseaux en forme de secteurs cylindriques, comme le montre la figure 9.

La figure 10 montre un mode de réalisation possible de la partie acquisition et émission d'un dispositif de contrôle similaire à celui de la figure 8.

Chaque transducteur, 18i par exemple, est relié à un amplificateur logarithmique 56 dont le gain est commandé par la tension appliquée sur une entrée 58. La sortie de l'amplificateur 56 attaque un convertisseur analogique-numérique 40, qui échantillonne le signal et quantifie chaque échantillon, sur par exemple dix bits. Le signal numérisé peut être communiqué à un bus vidéo 60 permettant la visualisation. Le signal est également appliqué à un ensemble de mémorisation et de compensation de profondeur 62 comportant une mémoire vive et un additionneur-soustracteur permettant d'ajouter au signal une rampe numérique mémorisée en 64. Cette rampe peut être fournie par un bus de paramètres 68, à quatre bits par exemple, à travers une mémoire vive de traitement 70.

La partie du dispositif de la figure 10 consacrée à la ré-émission comprend un circuit d'exponentiation 66, qui peut être une mémoire vive, chargée à partir du bus 68 et constituant une table de conversion. Les signaux numériques obtenus, sur douze bits par exemple, sont appliqués à un circuit de correction et de conversion 72 qui reçoit des coefficients multiplicateurs à partir du bus de paramètres 68. Ces coefficients peuvent être fournis sur quatre bits et mis sous forme analogique par un convertisseur numérique-analogique 74. La multiplication s'effectue alors sous forme analogique dans l'ensemble 72. Enfin le signal de sortie est appliqué à un amplificateur linéaire 76 attaquant le transducteur 18i. Le réglage initial de gain de l'amplificateur de réception 56 peut être effectué par le bus 68, à travers un registre de gain 78.

Etant donné que les signaux numériques obtenus après conversion logarithmique par l'amplificateur ne comportent pas de signe, un détecteur de signe 80 est prévu pour ajouter un bit de signe à chaque mot numérique dans la sortie du circuit d'exponentiation 66.

## Revendications

1. Procédé de contrôle interne non destructif de pièce par ultrasons, caractérisé en ce que :
(a) on illumine une première pièce (12) à l'aide d'un faisceau ultrasonore,
(b) on capte les signaux d'écho réfléchis reçus par des transducteurs d'un premier réseau (10), et on mémorise la forme et la répartition dans le temps de ces échos,
(c) on capte également les signaux réfractés reçus par des transducteurs appartenant à un second réseau (18), placé à l'opposé du premier par rapport à la pièce (12), et on mémorise la forme et la répartition dans le temps de ces signaux réfractés,
(d) on remplace la première pièce par une pièce à contrôler ayant la même forme et occupant le même emplacement et on applique à chacun des transducteurs utilisés en (b) et (c) des signaux d'activation obtenus par retournement temporel de la répartition et de la forme mémorisées,
(e) on observe les signaux reçus par les transducteurs du second réseau (18).

2. Procédé selon la revendication 1, caractérisé en ce que les étapes (a), (b), (c) sont effectuées en une seule fois, sur une pièce étalon.

3. Procédé selon la revendication 1, caractérisé en ce que les étapes (a), (b), (c) sont répétées sur plusieurs pièces insusceptibles de présenter les mêmes défauts et en ce que la moyenne des répartitions relevées au cours des étapes (b) et (c) est effectuée.

4. Procédé selon la revendication 1, caractérisé en ce que les étapes (a), (b), (c) sont synthétisées par modélisation mathématique de la pièce.

5. Procédé selon la revendication 1, 2 ou 3, caractérisé en ce qu'on constitue le faisceau d'illumination à l'aide de certains au moins des transducteurs du premier réseau.

6. Procédé selon l'une quelconque des revendications précédentes, caractérisé en ce que l'on tronque temporellement les signaux réfléchis et réfractés de façon à ne conserver que les signaux provenant de défauts dans la pièce (12) et les signaux provenant de la première réflexion et de la première transmission sur ou à travers les interfaces d'entrée et de sortie de la pièce.

7. Procédé selon l'une quelconque des revendications précédentes, caractérisé en ce qu'on vérifie l'emplacement de la pièce à contrôler par intercorrélation entre les signaux reçus par les transducteurs du premier réseau au cours d'une fenêtre temporelle correspondant à la réflexion sur l'interface d'entrée (14) et les signaux reçus pendant la même fenêtre temporelle après remplacement de la première pièce par la pièce à contrôler.

8. Dispositif permettant de mettre en oeuvre le procédé selon la revendication 1, caractérisé en ce qu'il comprend : un premier réseau de transducteurs (10) et un second réseau de transducteurs (18) placé en face du premier, chaque transducteur du premier réseau (10) et du second réseau étant muni d'une voie de traitement comportant un circuit de réception, une mémoire de stockage du signal provenant du transducteur et un émetteur de puissance programmable commandé par la mémoire suivant une répartition temporelle inverse de celle stockée dans la mémoire.

9. Dispositif selon la revendication 8, caractérisé en ce que le premier réseau est muni de moyens permettant d'appliquer aux transducteurs des signaux d'excitation mémorisés, les voies de traitement étant prévues pour mémoriser les signaux recueillis par les transducteurs après un retard déterminé.

10. Dispositif selon la revendication 8, caractérisé en ce que la mémoire est prévue pour mémoriser une répartition de formes d'onde et d'instants d'émission déterminée par le calcul.

## Patentansprüche

1. Verfahren zur zerstörungsfreien Ultraschallprüfung im Inneren von Teilen, **dadurch gekennzeichnet:**
(a) daß ein erstes Teil (12) mit Hilfe eines Ultraschallstrahls ausgeleuchtet wird,
(b) daß die von Meßwandlern in einem ersten Raster (10) empfangenen reflektierten Echosignale aufgefangen und diese Echosignale bezüglich ihrer Form und zeitlichen Verteilung gespeichert werden,
(c) daß die von zu einem zweiten Raster (18), das, bezogen auf das Teil (12), gegenüber dem ersten Raster liegt, gehörenden Meßwandlern empfangenen gebrochenen Signale ebenfalls aufgefangen und diese gebrochenen Signale bezüglich ihrer Form und zeitlichen Verteilung gespeichert werden,
(d) daß das erste Teil gegen ein Prüfteil mit gleicher Form ausgetauscht wird, welches dieselbe Stelle einnimmt, und daß an jeden der nach den Schritten (b) und (c) verwendeten Meßwandler Ansteuersignale angelegt werden, die durch zeitliche Kippung der gespeicherten Verteilung und Form erhalten werden,
(e) und daß die von den Meßwandlern des zweiten Rasters (18) empfangenen Signale beobachtet werden.

2. Verfahren nach Anspruch 1, **dadurch gekennzeichnet,** daß die Arbeitsschritte (a), (b), (c) an einem Referenzteil nur einmal vorgenommen werden.

3. Verfahren nach Anspruch 1, **dadurch gekennzeichnet,** daß die Arbeitsschritte an mehreren, zu denselben Fehlern nicht neigenden Teilen wiederholt werden, und daß über die im Verlauf der Arbeitsschritte (b) und (c) erfaßten Verteilungen das Mittel gebildet wird.

4. Verfahren nach Anspruch 1, **dadurch gekennzeichnet,** daß die Arbeitsschritte (a), (b), (c) durch Bildung eines mathematischen Modells des Teils synthetisiert werden.

5. Verfahren nach Anspruch 1, 2, oder 3, **dadurch gekennzeichnet,** daß der Ausleuchtstrahl mit Hilfe zumindest bestimmter Meßwandler des ersten Rasters gebildet wird.

6. Verfahren nach einem der vorhergehenden Ansprüche, **dadurch gekennzeichnet,** daß die reflektieren und gebrochenen Signale in der Weise zeitlich verkürzt werden, daß nur die von Fehlerstellen im Teil (12) kommenden Signale und die von der ersten Reflexion auf den und der ersten Übertragung durch die Ein- und Ausgangsgrenzflächen des Teils kommenden Signale gespeichert werden.

7. Verfahren nach einem der vorhergehenden Ansprüche, **dadurch gekennzeichnet,** daß der Ort des Prüfteils dadurch überprüft wird, daß die von den Meßwandlern im ersten Raster innerhalb eines der Reflexion auf der Eingangsgrenzfläche (14) entsprechenden zeitlichen Fensters empfangenen Signale mit den Signalen korreliert werden, die innerhalb desselben zeitlichen Fensters nach Auswechslung des ersten Teils durch das Prüfteil empfangen werden.

8. Vorrichtung zur Durchführung des Verfahrens nach Anspruch 1, **dadurch gekennzeichnet,** daß es folgendes aufweist: ein erstes aus Meßwandlern gebildetes Raster (10) und ein aus Meßwandlern gebildetes zweites Raster (18) das sich gegenüber dem ersten befindet, wobei jeder Meßwandler des ersten Rasters (10) und des zweiten Rasters mit einem Verarbeitungskanal ausgerüstet ist, welcher eine Empfangsschaltung, einen Speicher zur Abspeicherung des vom Meßwandler kommenden Signals, und einen programmierbaren Leistungssender umfaßt, der vom Speicher entsprechend einer zeitlichen Verteilung gesteuert wird, die die Inversion der im Speicher abgespeicherten Verteilung ist.

9. Vorrichtung nach Anspruch 8, **dadurch gekennzeichnet,** daß das erste Raster Einrichtungen aufweist, die es gestatten, an die Meßwandler gespeicherte Ansteuersignale anzulegen, wobei die Verarbeitungskanäle zum Speichern der Signale vorgesehen sind, die von den Meßwandlern nach einer vorgegebenen Verzögerungszeit aufgefangen werden.

10. Vorrichtung nach Anspruch 8, **dadurch gekennzeichnet,** daß der Speicher zum Abspeichern einer Verteilung der Wellenformen und der Zeitpunkte der rechnerisch ermittelten Abstrahlung vorgesehen ist.

## Claims

1. Method of ultrasound non destructive internal inspection of a piece characterized by the steps of:
(a) illuminating a first piece (12) with an ultrasound beam,
(b) sensing reflected echo signals received by transducers of a first array (10), and storing the waveforms and the time distributions of the echoes,
(c) also sensing refracted signals received by transducers of a second array (18) placed opposite to the first array relative to the piece (12) and storing waveforms and time distributions of the refracted signals
(d) replacing the first piece with a piece to be inspected having the same shape as the first piece and occupying the same location and applying, to each of the transducers used during steps (b) and (c), energization signals obtained by time inversion of the stored waveforms and distributions; and
(e) sensing the signals received by the transducers of the second array (18).

2. Method according to claim 1, characterized in that steps (a), (b), (c) are carried out once on a standard piece.

3. Method according to claim 1, characterized in that steps (a), (b), (c) are repeated on a plurality of pieces unlikely to have identical internal defects and in that the distributions obtained during steps (b) and (c) are averaged.

4. Method according to claim 1, characterized in that steps (a), (b), (c) are synthetized by mathematically modelling the piece.

5. Method according to claim 1, 2 or 3, characterized in that the illumination beam is formed by at least some of the transducers of the first array.

6. Method according to any one of the preceding claims, characterized in that the reflected and refracted signals are stored for only a limited period of time for keeping only the signals resulting from defects in the piece (12) and these signals which result from the first reflection and the first transmission on or across the input and output interfaces of the piece.

7. Method according to any one of the preceding claims, characterized in that the location of the piece to be inspected is checked by cross correlation between the signals received by the transducers of the first array during a time window corresponding to the reflection on the input interface (14) and the signals received during the same time window after substitution of the first piece with the piece to be inspected.

8. Device suitable for implementing the method of claim 1, characterized in that it comprises: a first array of transducer (10) and a second array of transducers (18) confronting the first array, each transducer of the first array (10) and of the second array being provided with a processing channel comprising a receiver circuit, a memory for storing the signal sensed by the respective transducer and a programmable power transmitter controlled by the memory according to a time distribution which is reversed from that which is stored in the memory.

9. Device according to claim 8, characterized in that the first array is provided with means for applying stored energization signals to the transducers, the processing channels being arranged for storing the signals collected by the transducers after a predetermined delay.

10. Device according to claim 8, characterized in that the memory is arranged for storing a distribution of waveforms and transmission times which is determined by computation.
